# FASCICULE DE BREVET EUROPEEN

(11) **EP 0 518 744 B1**
(45) Date de publication et mention de la délivrance du brevet: **27.09.1995**
(21) Numéro de dépôt: 92401559.7
(22) Date de dépôt: 05.06.1992
(51) Int. Cl.: B60J 7/053

(54) **Dispositif d'ouverture et de fermeture de toit comprenant un panneau coulissant, notamment pour véhicule automobile**
Öffnungs- und Schliessvorrichtung für Dach mit Schiebplatte für Kraftfahrzeug
Opening and closing device for a roof with a sliding panel for a motor vehicle

(30) Priorité: 13.06.1991 FR 9107225
(43) Date de publication de la demande: 16.12.1992
(73) Titulaire: WEBASTO HEULIEZ : Société à Responsabilité Limitée, F-85700 Les Châtelliers -Châteaumur (FR)
(72) Inventeur: Cheron, Christian, F-49000 Angers (FR); Thierry, Pierre, F-49300 Cholet (FR); De Gaillard, François, F-85390 Mouilleron en Pareds (FR)
(74) Mandataire: Keib, Gérard

(56) Documents cités:
- DE-C- 3 536 184
- FR-A- 2 384 640
- FR-A- 2 435 365
- FR-A- 2 648 403

## Description

L'invention concerne un dispositif d'ouverture et de fermeture de toit, notamment pour un véhicule automobile ayant un pavillon dans lequel est formée un ouverture, comprenant une paire de rails de guidage fixés sur le dessus du pavillon, de part et d'autre de l'ouverture, une paire de chariots avant et une paire de chariots arrière mobiles en translation longitudinale dans les rails de guidage, lesdits chariots avant et arrière étant commandés en translation dans les rails par une paire de câbles, un panneau mobile en translation par rapport à la surface du pavillon, et un mécanisme d'articulation du panneau par rapport à la surface du pavillon, en relation fonctionnelle avec les chariots pour dégager ou fermer l'ouverture par coulissement du panneau au-dessus de la surface du pavillon, le panneau ayant une extrémité avant et une extrémité arrière.

D'une façon générale, un tel dispositif d'ouverture et de fermeture de toit est fixé directement sur le dessus du pavillon d'un véhicule en première ou seconde monte. Dans ces dispositifs d'ouverture et fermeture de toit, un joint d'étanchéité longe la périphérie de l'ouverture dans le pavillon pour assurer l'étanchéité de l'ensemble en position de fermeture du pavillon.

Jusqu'à présent, dans les dispositifs connus d'ouverture et de fermeture de toit, les rails de guidage des chariots présentent une extrémité avant incurvée pour élever l'extrémité avant du panneau afin de décoller celui-ci du joint d'étanchéité tandis qu'une coulisse fait pivoter l'arrière du panneau mobile pour son coulissement au-dessus du pavillon. Un tel dispositif connu est décrit dans le document FR-8907941 (FR-A-2 648 403). Outre le fait que la courbure des rails accroît l'épaisseur du dispositif d'ouverture et fermeture de toit, le panneau a toujours tendance à frotter contre le joint d'étanchéité au début de la manoeuvre en coulissement du panneau au-dessus du pavillon. Ce frottement répété du panneau contre le joint d'étanchéité détériore la surface du joint au cours du temps et provoque un bruit désagréable.

Par conséquent l'objectif de l'invention est de remédier à ces inconvénients et en particulier d'éviter le frottement du panneau contre le joint d'étanchéité lors du coulissement du panneau au-dessus du pavillon.

Essentiellement, l'invention réside dans un dispositif d'ouverture et de fermeture de toit dans lequel l'élévation et le coulissement du panneau sont obtenus par deux paires de patins reliés au panneau, en relation fonctionnelle avec les deux paires de chariots coulissant dans les rails, les chariots déterminant la cinématique des patins et donc du panneau de manière à élever verticalement celui-ci, dans un premier temps au-dessus du joint d'étanchéité bordant l'ouverture dans le pavillon, sans mouvement en translation horizontale du panneau, puis à le coulisser au-dessus du pavillon depuis cette position de surélévation. Ainsi, le panneau est décollé du joint d'étanchéité sans frotter contre celui-ci lors de son dégagement de l'ouverture dans le pavillon.

Plus spécifiquement, l'invention concerne un dispositif d'ouverture et de fermeture de toit, notamment pour un véhicule automobile ayant un pavillon dans lequel est formée un ouverture, comprenant une paire de rails de guidage fixés sur le dessus du pavillon, de part et d'autre de l'ouverture, une paire de chariots avant et une paire de chariots arrière mobiles en translation longitudinale dans les rails de guidage, lesdits chariots avant et arrière étant commandés en translation dans les rails par une paire de câbles, un panneau mobile en translation par rapport à la surface du pavillon, et un mécanisme d'articulation du panneau par rapport à la surface du pavillon, en relation fonctionnelle avec les chariots pour dégager ou fermer l'ouverture par coulissement du panneau au-dessus de la surface du pavillon, le panneau ayant une extrémité avant et une extrémité arrière, caractérisé en ce que le mécanisme d'articulation comprend:
- une paire de patins avant et une paire de patins arrière reliés au panneau respectivement à l'avant et à l'arrière de celui-ci, les patins étant mobiles en translation longitudinale selon la direction de déplacement des chariots et étant en relation fonctionnelle avec les chariots avant et arrière pour s'élever ou s'abaisser verticalement, par rapport aux chariots lors du coulissant de ceux-ci dans les rails de guidage, selon une direction verticale perpendiculaire à la surface du pavillon;
- des moyens de blocage de la course en translation longitudinale des patins pendant l'élévation ou l'abaissement des patins par rapport aux chariots.

De façon avantageuse,
- les moyens de blocage sont constitués par des plaques de coulissement s'étendant longitudinalement dans les rails de guidage, les patins coulissant sur la surface supérieure de la plaque, chaque plaque comportant une découpe avant et une découpe arrière pour permettre le passage des patins avant et arrière respectivement depuis une position où les patins sont en butée contre les arêtes des découpes lorsque le panneau est en vis-à-vis de l'ouverture vers une position où ils coulissent sur le dessus de la surface supérieure de la plaque lorsque le panneau dégage l'ouverture;
- les plaques de coulissement font partie intégrante des rails de guidage;
- les patins avant et arrière ont des dimensions L,P déterminées selon la direction D de déplacement des chariots en translation longitudinale, lesdites dimensions L,P des patins avant et arrière étant sensiblement égales aux dimensions L,P respectives des découpes avant et arrière selon ladite direction de déplacement des chariots, et les dimensions L des patins avant et des découpes avant étant plus grandes que les dimensions P des patins arrière et des découpes arrière;
- les patins portent chacun au moins un organe de commande venant se loger et se déplacer dans au moins un chemin de guidage aménagé dans l'épaisseur de chaque chariot, les chemins de guidage dans les chariots étant identiques, chaque chemin de guidage comprenant une partie B centrale ayant un axe longitudinal faisant un angle prédéterminé avec l'axe longitudinal des rails pour former une pente, et deux parties A,C d'extrémité sensiblement parallèles entre elles et avec l'axe longitudinal des rails se raccordant aux extrémités respectives de la partie centrale du chemin de guidage;
- chaque patin porte deux organes de commande sensiblement alignés par rapport à l'axe longitudinal d'un rail, et chaque chariot comporte deux chemins de guidage identiques dans lesquels se logent et se déplacent les deux organes de commande;
- les organes de commande sont des plots ayant une section transversale sensiblement circulaire, le diamètre de leur section étant sensiblement égal à la largeur 1 des chemins de guidage;
- un chariot avant et un chariot arrière sont commandés en translation dans un rail par le même câble;
- le panneau est relié aux patins par des pattes d'accouplement, lesdites pattes d'accouplement étant fixées par une extrémité d'une part au panneau et emboîtées d'autre part par l'autre extrémité dans des évidements aménagés dans l'épaisseur des patins.

D'autres caractéristiques et avantages de l'invention seront encore mieux compris à la lecture de la description qui suit, faite en référence aux dessins annexés.

La figure 1 est une vue en perspective éclatée du dispositif d'ouverture et de fermeture de toit selon l'invention.

La figure 2 est une vue en perspective du mécanisme d'articulation selon l'invention.

Sur les figures, les mêmes références numériques désignent des éléments identiques.

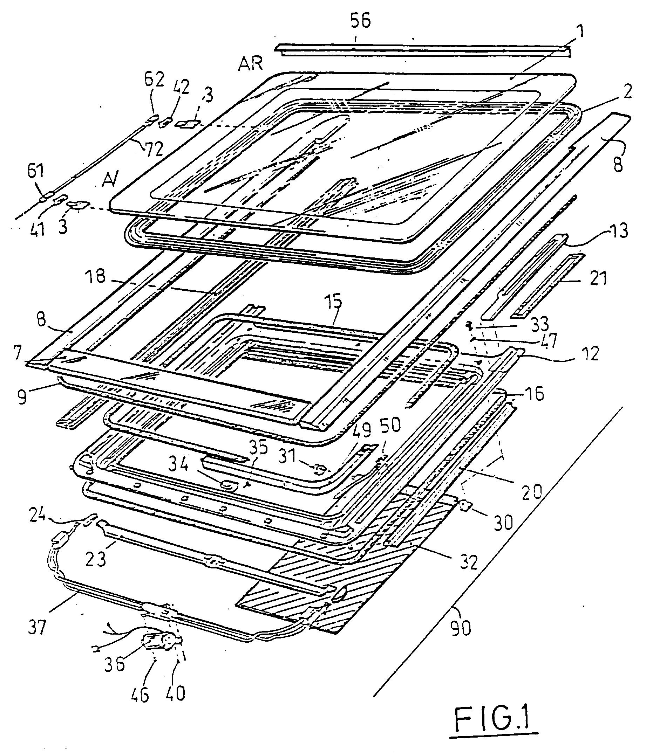

En se reportant à la figure 1, le dispositif d'ouverture et de fermeture de toit selon l'invention comprend un premier joint d'étanchéité 16 interposé entre une tôle gouttière avant 12 et le pavillon du véhicule 90. La tôle gouttière avant 12 délimite une ouverture dans le pavillon 90 et vient se fixer sur la surface supérieure du pavillon grâce à des moyens de fixation tels que vis filetées 33 et rondelles d'étanchéité 47. La tôle gouttière avant 12 est prolongée dans sa partie arrière par des tôles gouttières latérales 13 elles mêmes posées sur des seconds joints latéraux de gouttières 21 et fixées sur la surface supérieure du pavillon du véhicule. Sur la figure 1, une seule tôle gouttière arrière 13 et un seul joint d'étanchéité 21 sont représentés (côté droit du dispositif d'ouverture et fermeture de toit).

Des rails de guidage 18 (un seul étant représenté sur le côté gauche du dispositif d'ouverture et fermeture de toit) sont placés et fixés sur le dessus des tôles gouttières 12, 13, de part et d'autre des côtés latéraux de l'ouverture dans le pavillon. Ces rails de guidage 18 peuvent éventuellement être recouverts par des enjoliveurs avant 7 et latéraux 8 pourvus d'un troisième joint d'étanchéité 9.

Un quatrième joint d'étanchéité 15 parcourt le périmètre de l'ouverture dans le pavillon. Ce joint d'étanchéité 15 est placé et fixé par collage ou analogue sur le contour intérieur de la tôle gouttière avant 12 en vis-à-vis d'un panneau coulissant 1.

Un déflecteur de vent 49 est monté à articulation dans la tôle gouttière avant 12 et est actionné par des ressorts de déflecteur 50 connus en soi.

Un rideau 32 est enroulé autour d'un axe maintenu en position par des pattes de fixation 30, 31 placées à l'arrière de la tôle gouttière avant 12. L'extrémité libre du rideau 32 est agrafée ou collée à une traverse 23 montée sur des patins de guidage 24. Les patins de guidage 24 coulissent dans des rails de rideau 20 pour déployer et tendre le rideau 20 au-dessous de l'ouverture dans le pavillon. La traverse 23 vient s'agrafer à l'extrémité avant de la tôle gouttière avant 12 à un moyen d'ancrage 34 fixé à celle-ci par des vis 36 ou analogues pour maintenir le rideau tendu.

Une paire de chariots avant 61 et une paire de chariots arrière 62 sont disposés dans les rails de guidage 18. Un seul chariot avant 61 et un seul chariot arrière 62 sont représentés sur cette figure (dans la partie gauche du dispositif d'ouverture et fermeture de toit). Les chariots avant 61 et les chariots arrière 62 sont commandés en translation longitudinale dans les rails de guidage 18 par une paire de câbles 72 coulissant eux même à l'intérieur d'un passage de câble dans les rails 18. Les deux câbles 72 s'engagent à partir de l'extrémité avant des rails 18 dans un tube guide-câbles assemblé 37 sur lequel vient se monter un moteur électrique 36 fixé au tube guide-câbles assemblé 37 par des vis 46, 40. Le moteur électrique 36 entraîne une roue dentée (non représentée) sur laquelle sont engagés les câbles 72. La rotation de la roue dentée commande le déplacement des câbles dans les rails 18 et dans le guide-câbles assemblé 37, les câbles se déplaçant dans des direction opposées l'un par rapport à l'autre comme cela est bien connu. Bien entendu, on peut remplacer le moteur électrique 36 par une manivelle connue en soi pour entraîner en rotation la roue dentée. Dans les rails 18 les chariots avant 61 et arrière 62 se déplacent selon deux direction en fonction de la direction de manoeuvre de la roue dentée (sens des aiguilles d'une montre ou sens inverse). Comme visible sur cette figure, un chariot avant 61 est relié à un chariot arrière 62 par le même câble 72 pour coulisser ensemble et en même temps dans un rail de guidage 18. C'est à dire que selon une première direction de manoeuvre de la roue dentée entraînant les deux câbles 72, les chariots 61,62 se déplacent de l'avant vers l'arrière du rail et selon une seconde direction de manoeuvre de la roue dentée, les chariots 61,62 se déplacent de l'arrière vers l'avant du rail.

Deux paires de patins 41, 42 (une seule paire étant représentée dans la partie gauche du dispositif d'ouverture et fermeture de toit) sont reliées au panneau 1, lui même fixé à un cadre renfort 2, par l'intermédiaire de deux paires de pattes de fixation 3 placées respectivement à l'avant et à l'arrière du panneau 1. En position de fermeture du pavillon, le panneau 1 ferme complètement l'ouverture dans le pavillon et ses bords viennent en appui contre le joint d'étanchéité 15. Selon l'invention, les patins 41,42 sont en relation fonctionnelle avec les chariots 61,62, c'est à dire que les chariots 61, 62 commandent la cinématique des patins 41, 42, pour élever le panneau 1 tout d'abord au-dessus du joint d'étanchéité 15 sous l'action des câbles 72, puis coulisser le panneau 1 vers l'arrière du pavillon au-dessus de celui-ci. Par ailleurs, un profilé 56 de finition est fixé à l'arrière du panneau 1.

Etant donné que le dispositif d'ouverture et de fermeture de toit selon l'invention est sensiblement symétrique par rapport à son axe longitudinal selon la direction de coulissement du panneau 1 au dessus du pavillon, nous décrirons par la suite le mécanisme gauche d'articulation du panneau 1 visible sur la figure 1.

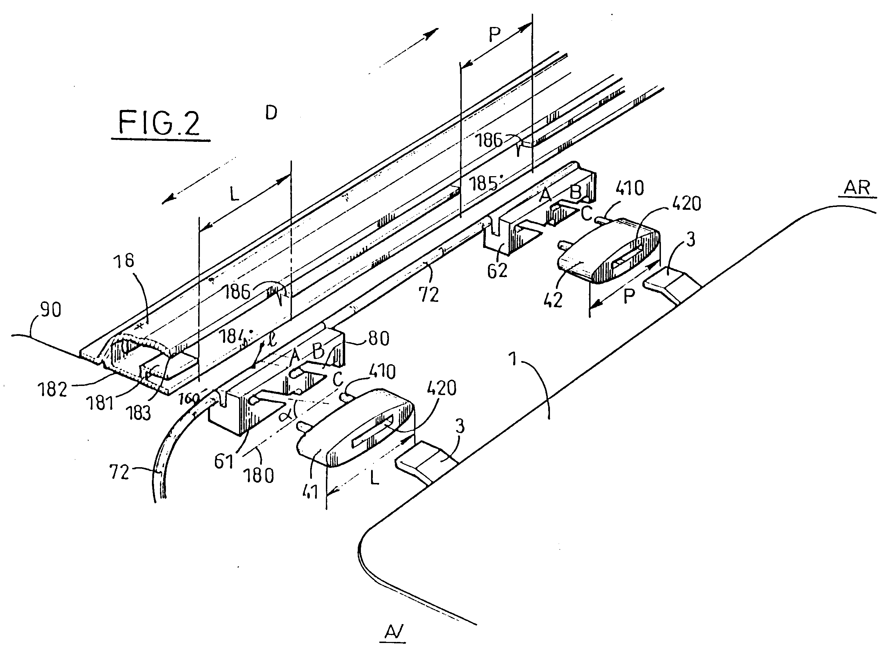

En se reportant à la figure 2, ce mécanisme d'articulation comprend un patin avant 41 et un patin arrière 42 reliés respectivement à l'avant et à l'arrière du panneau 1 sur un côté de celui-ci, le patin avant 41 et le patin arrière 42 étant connectés aux chariots avant 61 et arrière 62 respectivement. Les patins avant et arrière 41, 42 sont reliés au panneau 1 par l'intermédiaire d'une paire de pattes d'accouplement 3 chacune ayant une extrémité fixée au panneau 1 par collage ou analogue et l'autre extrémité emboîtée dans des évidements 420 aménagés dans l'épaisseur des patins 41, 42.

Le rail de guidage 18 ayant une section transversale sensiblement en forme de U comporte une plaque de coulissement 181 s'étendant longitudinalement dans le rail 18 entre les deux branches du U. La plaque de coulissement 181 comporte une surface supérieure sensiblement parallèle à l'une des branches 182 du U. La branche supérieure du U en vis-à-vis de la branche 182 porte sur son bord extérieure une aile 183 repliée à 90° pour délimiter un espace de coulissement des patins avant et arrière 41, 42 entre la plaque de coulissement 181 et l'aile supérieure du rail 18. D'une façon générale, la plaque de coulissement 181 et l'aile 183 font partie intégrante du profilé du rail de guidage 18. Ainsi que cela apparaît sur la figure 2, la plaque de coulissement 181 comporte une découpe avant 184 et une découpe arrière 185 pour permettre aux patins avant et arrière respectivement de passer d'une position où ils se trouvent bloqués entre les arêtes 186 des découpes en repos sur l'aile inférieure 182 du rail 18 lorsque le panneau 1 est en vis-à-vis de l'ouverture à une position où ils coulissent sur le dessus de la surface supérieure de la plaque 181 lorsque le panneau dégage l'ouverture.

Les chariots avant et arrière 61, 62 sont placés dans le fond du rail 18 en arrière de la plaque de coulissement 181 pour se déplacer en translation longitudinale dans le rail 18 sous la commande du câble 72. Les patins 41, 42 portent des plots de commande 410 en saillie vers les chariots 61,62 et venant se loger et se déplacer dans des chemins de guidage 80 aménagés dans l'épaisseur des chariots 61, 62. Sur la figure 2, chaque patin avant et arrière porte deux plots de commande 410 alignés parallèlement à l'axe longitudinal du rail 18 et chaque chariot avant et arrière 61, 62 comporte respectivement deux chemins de guidage 80 identiques et parallèles pour recevoir les deux plots de commande 410. Bien entendu, on peut prévoir d'équiper chaque patin et chaque chariot avec un seul plot de commande et un seul chemin de guidage respectivement lorsque le panneau 1 est suffisamment léger. Les plots de commande 410 ont une section transversale sensiblement circulaire dont le diamètre est sensiblement égal à la largeur 1 des chemins de guidage et on pourra aussi prévoir des les équiper de galets de roulement pour faciliter leur déplacement dans les chemins de guidage.

Un chemin de guidage d'un chariot 61,62 comporte une partie centrale B ayant un axe longitudinal 160 faisant un angle α (de l'ordre de 45°) avec l'axe longitudinal 180 du rail 18 pour former une pente et deux parties d'extrémité A et C, raccordées aux extrémités de la partie centrale B, les parties d'extrémité B et C étant sensiblement parallèles entre elles et à l'axe 180. De préférence, la partie d'extrémité C, en contact avec l'aile inférieure 182 du rail 18, est débouchante.

Le patin avant 41 et le patin arrière 42 ont respectivement une dimension L, P selon la direction D de déplacement des chariots en translation longitudinale dans le rail 18, sensiblement égale aux dimensions L, P des découpes avant 184 et arrière 185 dans la plaque de coulissement 181 de manière que les patins avant et arrière 41, 42 puissent s'engager dans lesdites découpes. Par ailleurs, la dimension L du patin avant 41 et de la découpe avant 184 est supérieure à la dimension P du patin arrière 42 et de la découpe arrière 185.

Nous allons maintenant décrire le fonctionnement général du mécanisme d'articulation selon l'invention.

Comme décrit précédemment, le chariot avant 61, et le chariot arrière 62 sont simultanément déplacés en translation longitudinale dans le rail 18 lors d'une manoeuvre du câble 72. En position de fermeture du pavillon, chaque plot de commande 410, logé dans un chemin de guidage 80, se trouve sensiblement dans la partie horizontale C raccordée à l'extrémité inférieure de la partie centrale B. Dans cette position, chaque patin 41, 42 est bloqué entre les arêtes 186 des découpes 184, 185, de sorte qu'il lui est impossible de se déplacer selon la direction D.

Selon la première direction de manoeuvre du câble 72, les chariots 41, 42 se déplacent vers l'arrière du pavillon et commandent le déplacement des plots de commande 410 dans les chemins de guidage 80. Selon cette direction de déplacement des chariots 61, 62, les quatre plots de commande 410 se déplacent dans la partie centrale B puis dans la partie d'extrémité A des chemins de guidage 80, les plots de commande 410 restant toujours alignés entre eux et parallèles à l'axe longitudinal du rail 18. Les déplacements simultanés des plots de commande 410 ont pour effet d'élever verticalement, selon une direction verticale perpendiculaire à la surface du pavillon, les patins 41, 42 et donc le panneau 1 au-dessus du joint d'étanchéité 15 jusqu'à ce que les plots de commande 410 se trouvent en butée dans la partie d'extrémité A des chemins de guidage 80. Dans cette position, les patins 41, 42 glissent sur la surface supérieure de la plaque de coulissement 181 sous l'action continue du câble 72 pour dégager l'ouverture dans le pavillon. Comme indiqué précédemment, la dimension L du patin avant 41 et de la découpe avant 184 étant supérieure à la dimension P du patin arrière 42 et de la découpe arrière 185, le patin avant 41 ne s'engagera pas dans la découpe arrière 185 lors de son passage au-dessus de cette découpe pendant le coulissement du panneau 1.

De même, selon la seconde direction de manoeuvre du câble 72, depuis la position d'ouverture du pavillon, le patin avant 41 coulissera au-dessus de la découpe arrière 185 sans être bloqué dans celle-ci. Selon cette seconde direction de manoeuvre, les plots de commande 410 se positionnent à la jonction de la partie horizontale A et de la partie inclinée B des chemins de guidage et sont entraînés en coulissement longitudinal selon la direction D jusqu'à ce que les patins avant et arrière 41, 42 se trouvent en vis-à-vis des découpes avant et arrière respectivement, 184, 185. Arrivés dans cette position, les patins avant et arrière 41, 42 s'abaissent verticalement dans les découpes avant et arrière 184, 185 sous l'effet du déplacement des plots de commande 410 dans les parties inclinées B des chemins de guidage 80. Les plots de commande 410 se positionnent ensuite dans la partie d'extrémité C des chemins de guidage 80 sous l'action continue du câble 72. Dans cette position, le panneau 1 ferme l'ouverture dans le pavillon et vient écraser le joint d'étanchéité 15 pour assurer l'étanchéité de l'ensemble.

Ainsi, le panneau 1 ne frotte pas contre le joint d'étanchéité 15 pendant le dégagement ou la fermeture de l'ouverture dans le pavillon du fait que le panneau 1 est élevé ou abaissé verticalement pendant ces deux opérations. Selon l'invention, la hauteur de la pente, définie par les chemins de guidage 80, est d'environ 6 mm, cette hauteur correspondant sensiblement à l'épaisseur du dispositif d'ouverture et de fermeture de toit.

## Revendications

1. Un dispositif d'ouverture et de fermeture de toit, notamment pour un véhicule automobile ayant un pavillon (90) dans lequel est formée un ouverture, comprenant une paire de rails de guidage (18) fixés sur le dessus du pavillon, de part et d'autre de l'ouverture, une paire de chariots avant (61) et une paire de chariots arrière (62) mobiles en translation longitudinale dans les rails de guidage, lesdits chariots avant et arrière étant commandés en translation dans les rails par une paire de câbles (72), un panneau (1) mobile en translation par rapport à la surface du pavillon, et un mécanisme d'articulation du panneau par rapport à la surface du pavillon, en relation fonctionnelle avec les chariots pour dégager ou fermer l'ouverture par coulissement du panneau au-dessus de la surface du pavillon, le panneau ayant une extrémité avant et une extrémité arrière, **caractérisé** en ce que le mécanisme d'articulation comprend:
- une paire de patins avant (41) et une paire de patins arrière (42) reliés au panneau respectivement à l'avant et à l'arrière de celui-ci, les patins étant mobiles en translation longitudinale selon la direction de déplacement des chariots et étant en relation fonctionnelle avec les chariots avant et arrière (61,62) pour s'élever ou s'abaisser verticalement, par rapport aux chariots lors du coulissement de ceux-ci dans les rails de guidage, selon une direction verticale perpendiculaire à la surface du pavillon;
- des moyens de blocage de la course en translation longitudinale des patins pendant l'élévation ou l'abaissement des patins par rapport aux chariots.

2. Le dispositif selon la revendication 1, dans lequel les moyens de blocage sont constitués par des plaques de coulissement (181) s'étendant longitudinalement dans les rails de guidage, les patins (41,42) coulissant sur la surface supérieure de la plaque, chaque plaque comportant une découpe avant (184) et une découpe arrière (185) pour permettre le passage des patins avant et arrière respectivement depuis une position où les patins sont en butée contre les arêtes (186) des découpes lorsque le panneau est en vis-à-vis de l'ouverture vers une position où ils coulissent sur le dessus de la surface supérieure de la plaque lorsque le panneau dégage l'ouverture.

3. Le dispositif selon la revendication 3, dans lequel les plaques de coulissement (181) font partie intégrante des rails de guidage (18).

4. Le dispositif selon la revendication 2, dans lequel les patins avant et arrière (41,42) ont des dimensions L,P déterminées selon la direction D de déplacement des chariots en translation longitudinale, lesdites dimensions L,P des patins avant (41) et arrière (42) étant sensiblement égales aux dimensions L,P respectives des découpes avant (184) et arrière (185) selon ladite direction de déplacement des chariots, et les dimensions L des patins avant (41) et des découpes (184) avant étant plus grandes que les dimensions P des patins arrière (42) et des découpes arrière (185).

5. Le dispositif selon la revendication 1, dans lequel les patins (41,42) portent chacun au moins un organe de commande (410) venant se loger et se déplacer dans au moins un chemin de guidage (80) aménagé dans l'épaisseur de chaque chariot, les chemins de guidage dans les chariots étant identiques, chaque chemin de guidage comprenant une partie centrale B ayant un axe longitudinal (160) faisant un angle prédéterminé avec l'axe longitudinal (180) des rails pour former une pente et deux parties d'extrémité A,C sensiblement parallèles entre elles et avec l'axe longitudinal (180) des rails se raccordant aux extrémités respectives de la partie centrale du chemin de guidage.

6. Le dispositif selon la revendication 5, dans lequel chaque patin porte (41,42) deux organes de commande (410) sensiblement alignés par rapport à l'axe longitudinal d'un rail, et chaque chariot comporte deux chemins de guidage (80) identiques dans lesquels se logent et se déplacent les deux organes de commande.

7. Le dispositif selon les revendications 5 ou 6, dans lequel les organes de commande sont des plots ayant une section transversale sensiblement circulaire, le diamètre de leur section étant sensiblement égal à la largeur 1 des chemins de guidage (80).

8. Le dispositif selon la revendication 1, dans lequel un chariot avant et un chariot arrière sont commandés en translation dans un rail par le même câble (72).

9. Le dispositif selon l'une quelconque des revendications précédentes, dans lequel le panneau est relié aux patins par des pattes d'accouplement (3), lesdites pattes d'accouplement étant fixées par une extrémité d'une part au panneau (1) et emboîtées d'autre part par l'autre extrémité dans des évidements (420) aménagés dans l'épaisseur des patins (41,42).

## Claims

1. Device for opening and closing a roof, particularly for a motor vehicle having a roof (90) in which an opening is formed, and comprising a pair of guide rails (18) secured to the upper surface of the roof on either side of the opening, a pair of forward carriages (61) and a pair of rear carriages (62), which are displaceable longitudinally in the guide rails, the displacement of said forward and rear carriages being controlled in the rails by a pair of cables (72), a panel (1) which is displaceable relative to the surface of the roof, and a mechanical means of articulation of the panel with respect to the surface of the roof, in a functional relationship with the carriages in order to disengage or to close the opening by a sliding movement of the panel above the surface of the roof, the panel having a forward end and a rear end, characterised in that the mechanical means of articulation comprises:
- a pair of forward runners (41) and a pair of rear runners (42) connected to the panel, respectively to the front and to the rear of the latter, the runners being displaceable longitudinally in accordance with the movement of displacement of the carriages, and being in a functional relationship with the forward and rear carriages (61, 62) in order to rise and fall vertically relative to the carriages during the latter's sliding movement in the guide rails, in accordance with a vertical direction perpendicular to the surface of the roof;
- means of locking the longitudinal travel of the runners during raising or lowering of the runners relative to the carriages.

2. Device according to claim 1, in which the locking means comprise sliding plates (181) extending longitudinally in the guide rails, the runners (41, 42) sliding on the upper surface of the plate, each plate comprising a forward cut-out portion (184) and a rear cut-out portion (185) allowing passage to the forward and rear runners respectively from a position in which the carriages abut against the edges (186) of the cut-out portions when the panel is located opposite the opening, into a position in which they slide on the upper part of the upper surface of the panel, when the panel leaves the opening free.

3. Device according to claim 2, in which the sliding plates (181) form an integral part of the guide rails (18).

4. Device according to claim 2, in which the forward and rear runners (41, 42) have specific dimensions L, P in accordance with the direction D of displacement of the carriages longitudinally, the said dimensions L, P of the forward (41) and rear (42) runners being substantially equal to the respective dimensions L, P of the forward (184) and rear (185) cut-out portions according to the said direction of displacement of the carriages, and the dimensions L of the forward runners (41) and of the forward cut-out portions (184) being greater than the dimensions P of the rear runners (42) and of the rear cut-out portions (185).

5. Device according to claim 1, in which the runners (41, 42) each carry at least one control means (410) which may be lodged and displaced in at least one guide track (80) provided in the thickness of each carriage, the guide tracks in the carriages being identical, each guide track comprising a central portion B having a longitudinal axis (160) which forms a predetermined angle with the longitudinal axis (180) of the rails in order to form a slope, and two terminal portions A, C, which are substantially parallel to one another and to the longitudinal axis (180) of the rails, and being connected to the respective ends of the central portion of the guide track.

6. Device according to claim 5, in which each runner (41, 42) carries two control means (410) which are substantially aligned with respect to the longitudinal axis of a rail, and each carriage comprises two identical guide tracks (80) in which there are lodged and displaced the two control means.

7. Device according to claims 5 or 6, in which the control means are pins having a substantially circular transverse section, the diameter of their cross-section being substantially equal to the width l of the guide tracks (80).

8. Device according to claim 1, in which the displacement in a rail of a forward carriage and a rear carriage are controlled by the same cable (72).

9. Device according to any one of the preceding claims, in which the panel is connected to the runners by coupling fastenings (3), said coupling fastenings being fixed by one end on the one hand to the panel (1) and fitted on the other hand by the other end in recesses (420) provided in the thickness of the runners (41, 42).

## Patentansprüche

1. Öffnungs- und Schließvorrichtung für Dach, insbesondere für ein Kraftfahrzeug, das ein Dach (90) hat, in dem eine Öffnung gebildet ist, und das ein Paar auf der Oberseite des Dachs befestigte Führungsschienen (18) beidseits der Öffnung aufweist, und ein Paar vordere (61) und ein Paar hintere Schlitten (62), die in Längsverschiebung in den Führungsschienen beweglich sind, wobei die vorderen und hinteren Schlitten in Parallelverschiebung in den Schienen von einem Paar Kabel (72) gesteuert werden, eine in Parallelverschiebung bezüglich der Oberfläche des Dachs bewegliche Platte (1) und einen Gelenkmechanismus der Platte bezüglich der Oberfläche des Dachs, der in funktionaler Verbindung mit den Schlitten ist, um die Öffnung durch Gleiten der Platte über die Oberfläche des Dachs zu öffnen oder zu schließen, wobei die Platte ein Vorderende und ein Hinterende hat, dadurch gekennzeichnet, daß der Gelenkmechanismus:
- ein Paar Vorderkufen (41) und ein Paar Hinterkufen (42) aufweist, die mit der Platte jeweils vorne und hinten von ihr verbunden sind, wobei die Kufen in Längsverschiebung gemäß der Verschiebungsrichtung der Schlitten beweglich und in funktionaler Verbindung mit den Vorder- und Hinterschlitten (61, 62) sind, um sich bezüglich der Schlitten während deren Gleiten in den Führungsschienen gemäß einer zu der Oberfläche des Dachs senkrechten vertikalen Richtung vertikal anzuheben oder abzusenken;
- Blockiereinrichtungen des Längsverschiebungs-Laufs der Kufen während des Anhebens oder Absinkens der Kufen bezüglich der Schlitten aufweist.

2. Vorrichtung gemäß Anspruch 1, bei der die Blockiereinrichtungen von Schiebplatten (181) gebildet sind, die sich längs in den Führungsschienen erstrecken, wobei die Kufen (41,42) über die Oberfläche der Platte gleiten, wobei jede Platte einen vorderen Ausschnitt (184) und einen hinteren Ausschnitt (185) hat, um das Verschieben der Vorder- und Hinterkufen jeweils von einer Position aus, in der die Kufen im Anschlag gegen die Kanten (186) der Ausschnitte sind, wenn die Platte gegenüber der Öffnung ist, in eine Position zu erlauben, in der sie über die Oberfläche der Platte gleiten, wenn die Platte die Öffnung freigibt.

3. Vorrichtung gemäß Anspruch 3, bei der die Schiebplatten (181) ein integrierter Teil der Führungsschienen (18) sind.

4. Vorrichtung gemäß Anspruch 2, bei der die Vorder- und Hinterkufen (41, 42) die gemäß der Verschiebungsrichtung D der Schlitten in Längsverschiebung festgelegten Größen L, P haben, wobei die Größen L, P der Vorder- (41) und Hinterkufen (42) praktisch gleich sind mit den jeweiligen Größen L, P der Vorder- (184) und Hinterausschnitte (185) gemäß der Verschiebungsrichtung der Schlitten, und wobei die Größen L der Vorderkufen (41) und der Vorderausschnitte (184) größer als die Größen P der Hinterkufen (42) und der Hinterausschnitte (185) sind.

5. Vorrichtung gemäß Anspruch 1, bei der die Kufen (41, 42) jeweils mindestens ein Steuerorgan (410) tragen, das sich in zumindest einem Führungsweg (80), der in der Dicke jedes Schlittens angebracht ist, anordnet und sich verschiebt, wobei die Führungswege in den Schlitten identisch sind, und wobei jeder Führungsweg einen Mittelteil B aufweist, der eine Längsachse (160) hat, die einen vorbestimmten Winkel mit der Längsachse (180) der Schienen bildet, um eine Schräge zu bilden, und zwei Endteile A, C, die praktisch parallel zueinander und mit der Längsachse (180) der Schienen sind, und die sich an die jeweiligen Enden des Mittelteils des Führungsweges anschließen.

6. Vorrichtung gemäß Anspruch 5, bei der jede Kufe (41, 42) zwei Steuerorgane (410) trägt, die praktisch bezüglich der Längsachse einer Schiene ausgerichtet sind, und jeder Schlitten zwei identische Führungswege (80) aufweist, in denen sich die beiden Steuerorgane anordnen und verschieben.

7. Vorrichtung gemäß den Ansprüchen 5 oder 6, bei der die Steuerorgane Steckstellen sind, die einen praktisch kreisförmigen querliegenden Abschnitt haben, wobei der Durchmesser ihres Abschnitts praktisch gleich der Breite l der Führungswege (80) ist.

8. Vorrichtung gemäß Anspruch 1, bei der ein Vorder- und ein Hinterschlitten in Parallelverschiebung in einer Schiene von demselben Kabel (72) gesteuert werden.

9. Vorrichtung gemäß irgendeinem der vorherigen Ansprüche, bei der die Platte mit den Kufen durch Einsteckklammern (3) verbunden ist, wobei die Einsteckklammern einerseits mit einem Ende an der Platte (1) befestigt und andererseits mit dem anderen Ende in die in der Dicke der Kufen (41, 42) angebrachten Öffnungen (420) eingesteckt sind.
